# EUROPEAN PATENT APPLICATION

(11) **EP 3 514 740 A1**
(43) Date of publication of application: **24.07.2019**
(21) Application number: 17850502.0
(22) Date of filing: 20.06.2017
(51) Int. Cl.: G06Q 10/06, G06Q 10/10

(54) **INFORMATION PROCESSING DEVICE**

(30) Priority: 16.09.2016 JP 2016181645
(71) Applicant: Sony Corporation, Tokyo 108-0075 (JP); Sony Mobile Communications Inc., Shinagawa-ku Tokyo 140-0002 (JP)
(72) Inventor: NAKAGAWA, Ayumi, Tokyo 108-0075 (JP); SAKAI, Shimon, Tokyo 108-0075 (JP); HOSOKAWA, Satoshi, Tokyo 140-0002 (JP)
(74) Representative: MFG Patentanwälte Meyer-Wildhagen Meggle-Freund Gerhard PartG mbB
(86) International application number: PCT/JP2017/022708
(87) International publication number: WO 2018/051596

(57) **Abstract**

[Object] To dynamically correct goal plans even in the case where a user does not clearly input factors.

[Solution] Provided is an information processing device including: a planning unit configured to generate a goal plan for achieving a set goal; an estimation unit configured to estimate a behavior schedule of a user on the basis of collected external information; and a calculation unit configured to calculate an influence rate of the behavior schedule on the goal plan, in which the planning unit corrects the goal plan on the basis of the influence rate. In addition, provided is an information processing device including: an input unit configured to receive a goal input by a user; and an output unit configured to output a goal plan generated on the basis of the goal, in which the output unit outputs a goal plan corrected on the basis of a behavior schedule of the user and an influence rate of the behavior schedule on the goal plan, the behavior schedule being estimated on the basis of collected external information.

## Description

### Technical Field

The present disclosure relates to an information processing device.

### Background Art

In recent years, various kinds of services have been proposed for creating a plan for achieving a set goal instead of a user. In addition, such services include a service having a means for appropriately correcting the created plan in accordance with information input by the user. For example, Patent Literature 1 discloses a technology of changing an improved plan portfolio for behavioral change on the basis of personal preference or restriction data that has been input.

### Citation List

### Patent Literature

Patent Literature 1: JP 2009-157837A

### Disclosure of Invention

### Technical Problem

However, the technology according to Patent Literature 1 requires the user to clearly input the personal preference or restriction data. This creates a burden of data input. In addition, according to the technology described in Patent Literature 1, the user inputs data in response to preset questions. Therefore, according to the technology described in Patent Literature 1, it is difficult to change a plan on the basis of factors that are not taken into consideration in advance, or factors that the user does not recognize.

Accordingly, the present disclosure proposes a novel and improved information processing device capable of dynamically correcting goal plans even in the case where the user does not clearly input factors.

### Solution to Problem

According to the present disclosure, there is provided an information processing device including: a planning unit configured to generate a goal plan for achieving a set goal; an estimation unit configured to estimate a behavior schedule of a user on the basis of collected external information; and a calculation unit configured to calculate an influence rate of the behavior schedule on the goal plan. The planning unit corrects the goal plan on the basis of the influence rate.

In addition, according to the present disclosure, there is provided an information processing device including: an input unit configured to receive a goal input by a user; and an output unit configured to output a goal plan generated on the basis of the goal. The output unit outputs a goal plan corrected on the basis of a behavior schedule of the user and an influence rate of the behavior schedule on the goal plan, the behavior schedule being estimated on the basis of collected external information.

### Advantageous Effects of Invention

As described above, according to the present disclosure, it is possible to dynamically correct goal plans even in the case where a user does not clearly input factors.

Note that the effects described above are not necessarily limitative. With or in the place of the above effects, there may be achieved any one of the effects described in this specification or other effects that may be grasped from this specification.

### Brief Description of Drawings

FIG. 1 is a configuration example of an information processing system according to an embodiment of the present disclosure.
FIG. 2 is a functional block diagram of an information processing terminal according to the embodiment.
FIG. 3 is a functional block diagram of an information processing server according to the embodiment.
FIG. 4 is a diagram illustrating an example of goal plans generated by a planning unit according to the embodiment.
FIG. 5 is a diagram illustrating an example of goal plans corrected on the basis of a behavior schedule of a user and an influence rate of the behavior schedule, the behavior schedule having been estimated on the basis of external information according to the embodiment.
FIG. 6 is an illustration diagram of service information acquired from an external service according to the embodiment.
FIG. 7 is a diagram illustrating an example of community information acquired from an external service according to the embodiment.
FIG. 8 is a diagram illustrating estimation of a behavior history based on service information according to the embodiment.
FIG. 9 is a diagram illustrating an example of a behavior schedule of a user estimated on the basis of a behavior characteristic and goal plans corrected on the basis of an influence rate of the behavior schedule according to the embodiment.
FIG. 10 is a diagram illustrating proposal and approval of a goal plan by voice according to the embodiment.
FIG. 11 is a diagram illustrating an example of influence rate calculation performed by a calculation unit according to the embodiment.
FIG. 12 is a diagram illustrating examples of causal relationship estimation made by the calculation unit according to the embodiment.
FIG. 13 is a diagram illustrating an example of goal plan correction based on a behavior result with respect to a goal plan according to the embodiment.
FIG. 14 is a diagram illustrating an example of goal plan correction based on a behavior result with respect to a behavior schedule according to the embodiment.
FIG. 15 is a diagram illustrating behavior result estimation made by an estimation unit according to the embodiment.
FIG. 16 is a flowchart illustrating a workflow of goal plan correction based on estimation of a behavior schedule according to the embodiment.
FIG. 17 is a flowchart illustrating a workflow of goal plan correction based on estimation of a behavior result according to the embodiment.
FIG. 18 is a diagram illustrating a hardware configuration example according to the present disclosure.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that, the description is given in the following order.
1. Embodiment
   1.1. System configuration example
   1.2. Functional configuration example of information processing terminal 10
   1.3. Functional configuration example of information processing server 20
   1.4. Estimation of behavior schedule and correction of goal plan
   1.5. Estimation of causal relationship and calculation of influence rate
   1.6. Goal plan correction based on behavior result
   1.7. Workflow of operation of information processing server 20
2. Exemplary hardware configuration
3. Conclusion

### <1. Embodiment>

### «1.1. System configuration example»

First, a system configuration example according to an embodiment of the present disclosure will be described. The information processing system according to the present embodiment includes a function of generating goal plans for achieving a goal set by a user. In addition, the information processing system according to the present embodiment includes a function of estimating a behavior schedule of the user on the basis of various kinds of external information that has been collected, and correcting the generated goal plan on the basis of the behavior schedule. At this time, the information processing system according to the present embodiment calculates an influence rate of the behavior schedule on the goal plan and corrects the goal plan on the basis of the influence rate.

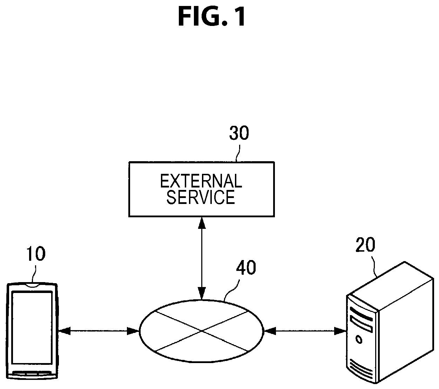

FIG. 1 is a configuration example of the information processing system according to the present embodiment. With reference to FIG. 1, the information processing system according to the present embodiment may include an information processing terminal 10, an information processing server 20, and an external service 30. In addition, the information processing terminal 10 and the information processing server 20 are connected via a network 40, and the external service 30 and the information processing server 20 are connected via the network 40 such that they communicate with each other.

### (Information processing terminal 10)

The information processing terminal 10 according to the present embodiment is an information processing device that proposes generated goal plans to a user. In addition, the information processing terminal 10 according to the present embodiment includes a function of receiving a goal input by the user and a behavior schedule registered by the user. The information processing terminal 10 according to the present embodiment may be a mobile phone, a smartphone, a tablet, a wearable device, a personal computer (PC), or the like. In addition, the information processing terminal 10 according to the present embodiment may be a display device, a projector, various kinds of agent device, or a robot, for example. The information processing terminal 10 according to the present embodiment may be implemented as various kinds of devices having the function of proposing goal plans to a user and the function of receiving user input related to the goal plans.

### (Information processing server 20)

The information processing server 20 according to the present embodiment is an information processing device that generates goal plans for achieving a goal set by a user. In addition, the information processing server 20 according to the present embodiment includes a function of estimating a behavior schedule of the user on the basis of collected external information, and correcting the goal plan on the basis of the behavior schedule. At this time, the information processing server 20 according to the present embodiment calculates influence rates of the estimated behavior schedule on the goal plans, and corrects the goal plans on the basis of the influence rates. Accordingly, the information processing server 20 according to the present embodiment includes a function of estimating causal relationships between the estimated behavior schedule and the goal plans.

### (External service 30)

The external service 30 according to the present embodiment may be various kinds of services that provide service information to the information processing server 20. As described above, the service information provided by the external service 30 according to the present embodiment may be used by the information processing server 20 to estimate a behavior schedule. For example, the external service 30 according to the present embodiment may be a social networking service (SNS), a message application including an e-mail function, a chat function, or the like, a voice call application, etc. In addition, the external service 30 according to the present embodiment may be an exercise management application, a health management application, a search service, a purchase service, a reservation service, or the like.

### (Network 40)

The network 40 includes a function of connecting the information processing terminal 10 to the information processing server 20, and connecting the external service 30 to the information processing server 20. The network 40 may include a public network such as the Internet, a telephone network, and a satellite communication network, various local area networks (LANs) including Ethernet (registered trademark), a wide area network (WAN), and the like. In addition, the network 40 may include a dedicated circuit network such as an internet protocol-virtual private network (IP-VPN). In addition, the network 40 may include wireless communication networks such as Wi-Fi (registered trademark) and Bluetooth (registered trademark).

The configuration example of the information processing system according to the present embodiment has been described above. Note that, the example in which the information processing terminal 10 and the information processing server 20 are implemented as independent information processing devices has been described above with reference to FIG. 1. However, the configuration example of the information system according to the present embodiment is not limited thereto. The information processing terminal 10 and the information processing server 20 according to the present embodiment may be implemented as a single information processing device.

Alternatively, the respective functions of the information processing terminal 10 and the information processing server 20 according to the present embodiment may be implemented by three or more information processing devices. The system configuration example according to the present embodiment may be flexibly changed in accordance with an amount of information to be handled, specifications of the system, operational conditions, or the like.

### <<1.2. Functional configuration example of information processing terminal 10»

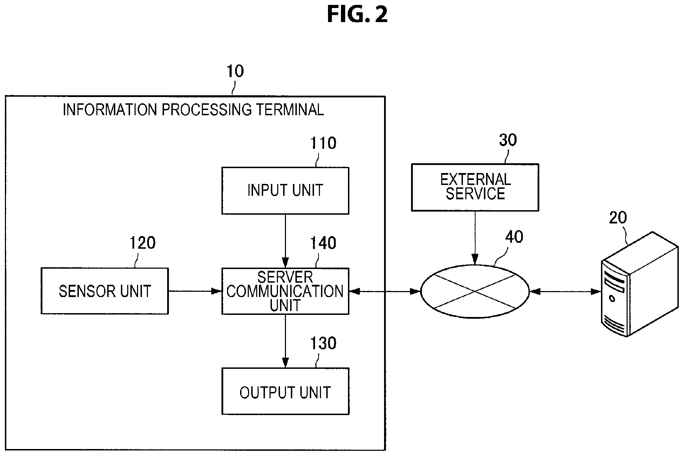

Next, a functional configuration example of the information processing terminal 10 according to the present embodiment will be described. FIG. 2 is a functional block diagram of the information processing terminal 10 according to the present embodiment. With reference to FIG. 2, the information processing terminal 10 according to the present embodiment includes an input unit 110, a sensor unit 120, an output unit 130, and a server communication unit 140. Next, details of the above-listed respective structural elements will be described while focusing on features of the structural elements.

### (Input unit 110)

The input unit 110 has a function of receiving a goal and a behavior schedule that are clearly input by a user. Therefore, the input unit 110 according to the present embodiment may include various kinds of devices or sensors for detecting operation input by the user or speech of the user. For example, the input unit 110 may be implemented by various buttons, a keyboard, a touch screen, a mouse, a switch, or the like. In addition, the input unit 110 may include a microphone or the like that converts the speech of the user into electrical signals.

### (Sensor unit 120)

The sensor unit 120 includes a function of collecting various kinds of sensor information related to behavior of the user. The various kinds of sensor information collected by the sensor unit 120 according to the present embodiment may be used for estimating a behavior result of the user (to be described later). For example, the sensor unit 120 according to the present embodiment may include a function of acquiring sensor information related to the whereabouts of the user, travel distance of the user, or the like. Accordingly, the sensor unit 120 according to the present embodiment may include the Global Positioning System (GPS), an acceleration sensor, a gyro sensor, a geomagnetic sensor, an imaging sensor, a clock, or the like, for example. In addition, the sensor unit 120 according to the present embodiment may acquire sensor information related to health conditions of the user such as a pulse, a blood pressure, or a body temperature. In this case, the sensor unit 120 according to the present embodiment may include various kinds of devices for measuring the health conditions as described above. Note that, the sensor unit 120 according to the present embodiment may share a sound collection device such as the microphone with the input unit 110. In other words, the sensor information according to the present embodiment may include information related to speech of the user.

### (Output unit 130)

The output unit 130 includes a function of outputting goal plans generated by the information processing server 20 on the basis of a goal input by the user. More specifically, the output unit 130 according to the present embodiment includes a function of outputting goal plans corrected on the basis of a behavior schedule of the user and influence rates of the behavior schedule on the goal plans, the behavior schedule having been estimated on the basis of collected external information. At this time, the output unit 130 according to the present embodiment may output visual information or sound information related to the goal plans. Therefore, the output unit 130 according to the present embodiment may include a display device for outputting the visual information or a speaker for outputting the sound information. Here, for example, the display device may be implemented by a cathode ray tube (CRT) display device, a liquid crystal display (LCD) device, an organic light emitting diode (OLED) device, a touchscreen, a projector, or the like. In addition, the output unit 130 according to the present embodiment may include a speech synthesis function such as text-to-speech (TTS).

### (Server communication unit 140)

The server communication unit 140 includes a function of performing information communication with the information processing server 20. Specifically, the server communication unit 140 according to the present embodiment transmits information related to user input operation detected by the input unit 110 or various kinds of sensor information collected by the sensor unit 120, to the information processing server 20. In addition, the server communication unit 140 receives information related to goal plans generated or corrected by the information processing server 20, and a signal related to output control over the goal plans.

The functional configuration example of the information processing terminal 10 according to the present embodiment has been described above. Note that, the above described functional configuration is a mere example, and the functional configuration example of the information processing terminal 10 according to the present embodiment is not limited thereto. The information processing terminal 10 according to the present embodiment may further include a structural element for achieving the various kinds of functions of the information processing server 20. For example, the information processing terminal 10 may include a part or all of a planning unit 210, an estimation unit 220, a calculation unit 230, and an output control unit 240 (that are to be described later). The functional configuration of the information processing terminal 10 according to the present embodiment may be flexibly changed.

### <<1.3. Functional configuration example of information processing server 20»

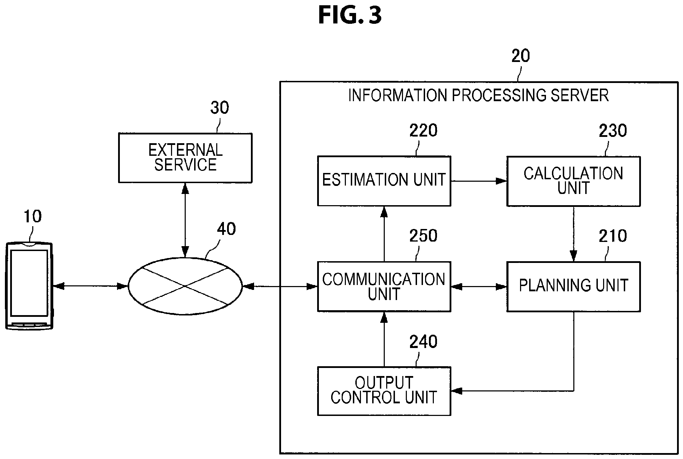

Next, a functional configuration example of the information processing server 20 according to the present embodiment will be described. FIG. 3 is a functional block diagram of the information processing server 20 according to the present embodiment. With reference to FIG. 3, the information processing server 20 according to the present embodiment includes the planning unit 210, the estimation unit 220, the calculation unit 230, the output control unit 240, and the communication unit 250. Next, details of the above-listed respective structural elements will be described while focusing on features of the structural elements.

### (Planning unit 210)

The planning unit 210 includes a function of generating goal plans for achieving a set goal. In addition, the planning unit 210 according to the present embodiment includes a function of correcting goal plans on the basis of a behavior schedule estimated by the estimation unit 220 and influence rates of the behavior schedule calculated by the calculation unit 230. In other words, the planning unit 210 according to the present embodiment is capable of correcting generated goal plans on the basis of delay in a goal plan or estimation of a behavior schedule of the user related to early achievement. When using the above-described functions of the planning unit 210 according to the present embodiment, it is possible to dynamically correct the goal plans even in the case where the user does not clearly input a behavior schedule.

In addition, the planning unit 210 according to the present embodiment includes a function of correcting generated goal plans on the basis of a behavior result of the user estimated by the estimation unit 220. In other words, the planning unit 210 according to the present embodiment is capable of correcting the generated goal plans on the basis of estimation of non-achievement or achievement of a goal plan of the user. When using the above-described functions of the planning unit 210 according to the present embodiment, it is possible to dynamically correct the goal plans even in the case where the user does not clearly input a behavior result.

In addition, the planning unit 210 according to the present embodiment may fix the goal plans on the basis of approval from the user. For example, the planning unit 210 according to the present embodiment may fix the goal plans when the user approves the corrected goal plans via the information processing terminal 10. When using the above-described functions of the planning unit 210 according to the present embodiment, it is possible to approve correction contents of the goal plans in association with the estimated behavior schedule and behavior result after the user confirms the correction contents. Therefore, effects of suppressing negative factors and effects of enhancing positive factors (that are to be described later) are expected. Note that, details of the correction of goal plans according to the present embodiment will be described later.

### (Estimation unit 220)

The estimation unit 220 includes a function of estimating the behavior schedule of the user on the basis of collected external information. Here, for example, the external information according to the present embodiment may include various kinds of service information acquired from the external service 30 and sensor information collected from the information processing terminal 10 or the like. When using the above-described functions of the estimation unit 220 according to the present embodiment, it is possible to estimate the behavior schedule of the user even in the case where the user does not clearly input the behavior schedule.

Note that, the estimation unit 220 according to the present embodiment may estimate the behavior schedule of the user by interpreting intention on the basis of the above-described service information or the like. For example, the estimation unit 220 according to the present embodiment is capable of extracting intention included in a text by doing language analysis on the text acquired from the external service 30 such as an SNS or the text obtained by recognizing speech of the user. When using the above-described functions of the estimation unit 220 according to the present embodiment, it is possible to estimate, with high accuracy, the behavior schedule of the user that is not clearly input.

In addition, the estimation unit 220 according to the present embodiment may estimate a behavior schedule on the basis of a behavior characteristic of the user. Note that, for example, the behavior characteristic of the user according to the present embodiment includes preference, a scope of interests, a custom, or the like of the user. For example, the estimation unit 220 may estimate the behavior schedule of the user on the basis of the behavior characteristic of the user and shop opening information and event information acquired from the external service 30. When using the above-described functions of the estimation unit 220 according to the present embodiment, it is possible to make a higher-level estimation on the basis of behavior characteristics of each user.

In addition, in this case, the estimation unit 220 according to the present embodiment may acquire the behavior characteristics from a behavior history of the user. For example, the estimation unit 220 is capable of estimating that the user participates in an event every ear, from past behavior schedules of the user. When using the above-described functions of the estimation unit 220 according to the present embodiment, it is possible to estimate a future behavior schedule of the user on the basis of the past behavior actually performed by the user.

In addition, the estimation unit 220 according to the present embodiment may estimate a behavior history of the user on the basis of external information. For example, the estimation unit 220 is capable of estimating the behavior history of the user on the basis of texts, images, search histories, purchase histories, reservation histories, or the like acquired from the external service 30. In addition, for example, the estimation unit 220 may estimate the behavior history of the user on the basis of sensor information such as the GPS. When using the above-described functions of the estimation unit 220 according to the present embodiment, it is possible to estimate a behavior history of the user from many angles and estimate a future behavior schedule.

In addition, the estimation unit 220 according to the present embodiment includes a function of estimating a behavior result of the user with respect to a goal plan. Here, for example, the behavior result according to the present embodiment indicates the user's achievement level of the goal plans: 30 minutes of walking every day. When the estimation unit 220 according to the present embodiment estimates the behavior result of the user, it is possible to dynamically correct the goal plan on the basis of the behavior result estimated by the planning unit 210 even in the case where the user does not input the behavior result clearly.

Note that, the estimation unit 220 may estimate the behavior result of the user on the basis of external information. For example, the estimation unit 220 is capable of estimating the behavior result of the user on the basis of service information acquired from the external service 30 such as the exercise management application, sensor information collected by the information processing terminal 10, or the like. When using the above-described functions of the estimation unit 220 according to the present embodiment, it is possible to considerably reduce the user's loads of a process of clearly inputting the behavior result.

### (Calculation unit 230)

The calculation unit 230 includes a function of calculating influence rates of the behavior schedule on the goal plans. In other words, the calculation unit 230 according to the present embodiment calculates a level of influence of the behavior schedule of the user on the goal plan, the behavior schedule of the user having been estimated by the estimation unit 220. When using the above-described functions of the calculation unit 230 according to the present embodiment, it is possible to extract only a behavior schedule that will influence the goal plan from behavior schedules estimated by the estimation unit 220, and correct the goal plans in accordance with the level of the influence of the behavior schedule.

In addition, in this case, the calculation unit according to the present embodiment may calculate the influence rates by estimating causal relationships between the goal plans and the behavior schedule estimated by the estimation unit 220. Specifically, the calculation unit 230 first acquires a past behavior schedule that is similar to the behavior schedule estimated by the estimation unit 220. Next, the calculation unit 230 can estimate the causal relationships by comparing sensor information, service information, or the like on a time axis before and after the acquired past behavior schedule. When using the above-described functions of the calculation unit 230 according to the present embodiment, it is possible to extract a factor (behavior schedule) that is not recognized by the user but that will influence a goal plan, and correct goal plans on the basis of the factor (behavior schedule). Note that, details of the estimation of the causal relationships according to the present embodiment will be described later.

### (Output control unit 240)

The output control unit 240 includes a function of controlling output related to goal plans generated or corrected by the planning unit 210. Specifically, the output control unit 240 causes the output unit 130 of the information processing terminal 10 to output the goal plans generated or corrected by the planning unit 210. In addition, the output control unit 240 according to the present embodiment causes the output unit 130 to output the goal plans and information related to influence rates that are used for correcting the goal plans. In other words, the output control unit 240 according to the present embodiment is capable of causing a behavior schedule that is a factor in correcting the goal plans and the influence rates of the behavior schedule to be proposed to the user. When using the above-described functions of the output control unit 240 according to the present embodiment, it is possible for the user to recognize a reason why the goal plans are corrected and a factor (behavior schedule) that influences the goal plans.

### (Communication unit 250)

The communication unit 250 includes a function of performing information communication with the information processing terminal 10 and the external service 30. Specifically, the communication unit 250 receives sensor information and information related to a goal or a behavior schedule that the user has clearly input via the information processing terminal 10. In addition, the communication unit 250 receives various kinds of service information from the external service 30. In addition, the communication unit 250 transmits, to the information processing terminal 10, goal plans generated or corrected by the planning unit 210 and an output control signal related to the goal plans.

The functional configuration example of the information processing server 20 according to the present embodiment has been described above. Note that, the above described functional configuration is a mere example, and the functional configuration of the information processing server 20 according to the present embodiment is not limited thereto. As described above, a part or all of the respective structural elements of the information processing server 20 according to the present embodiment may be implemented as functions of the information processing terminal 10. In addition, a part of the respective structural elements of the information processing server 20 may be implemented as functions of another device. For example, the estimation unit 220 and the calculation unit 230 may be implemented as functions of another device that is different from the information processing server 20. In addition, the information processing server 20 according to the present embodiment may further include a structural element other than the above-described structural elements. For example, the information processing server 20 may further include a storage unit that stores the goal plans, the behavior schedules, the influence rates, the external information, and the like. The functional configuration of the information processing server 20 according to the present embodiment may be flexibly changed.

### «1.4. Estimation of behavior schedule and correction of goal plan»

Next, details of the estimation of a behavior schedule and the correction of goal plans according to the present embodiment will be described. As described above, the information processing server 20 according to the present embodiment includes a function of generating goal plans for achieving a goal set by a user. In addition, the information processing server 20 according to the present embodiment includes a function of correcting the goal plans on the basis of external information such as service information acquired from the external service 30 or sensor information acquired from the information processing terminal 10.

### (Generation of goal plan)

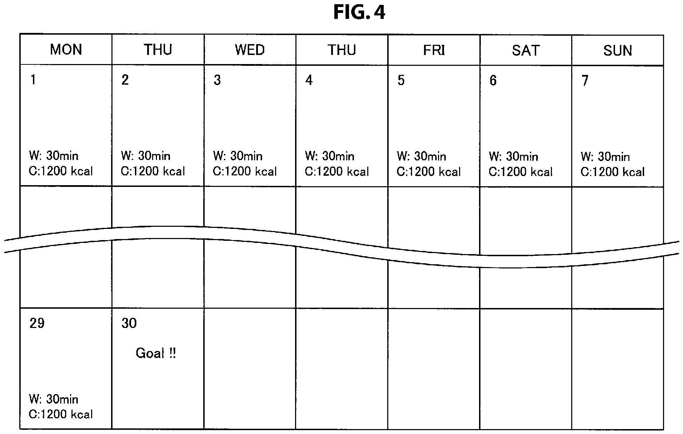

First, a goal plan generated by the planning unit 210 of the information processing server 20 will be described. FIG. 4 is a diagram illustrating an example of the goal plans generated by the planning unit 210 according to the present embodiment. FIG. 4 illustrates daily goal plans that the planning unit 210 has generated with respect to a set goal. Note that, in FIG. 4, "W: 30 min" means 30 minutes of walking, and "C: 1200 kcal" means calorie intake limitation of 1200 kcal. For example, the planning unit 210 according to the present embodiment is capable of generating goal plans illustrated in FIG. 4 on the basis of a preset basic plan and a goal of "losing 4 kilograms in a month" that the user has input to the information processing terminal 10.

Note that, the goal plans illustrated in FIG. 4 are a mere example. It is also possible for the planning unit 210 according to the present embodiment to set goal plans on the basis of a rule that is different from the example illustrated in FIG. 4. For example, in the example illustrated in FIG. 4, the identical goal plans are set for both weekdays and holidays. However, it is also possible for the planning unit 210 to generate goal plans that are different between weekdays and holidays. In addition, in the example illustrated in FIG. 4, the goal plans are set every day. However, it is also possible for the planning unit 210 to generate goal plans every other day or with certain periodicity. In addition, in the example illustrated in FIG. 4, two goals related to exercise and dietary restriction are set. However, it is also possible for the planning unit 210 to set one of the two goals or set a different kind of goal. In addition, the planning unit 210 may set goal plans on the basis of profile information such as age, weight, or the like of the user. In addition, it is also possible for the user to input the above-described generation conditions via the information processing terminal 10. The generation of the goal plans according to the present embodiment may be appropriately designed.

### (Estimation of behavior schedule based on external information and correction of goal plan)

Next, details of the estimation of a behavior schedule on the basis of external information and the correction of goal plans according to the present embodiment will be described. As described above, the information processing server 20 according to the present embodiment includes a function of estimating a behavior schedule of a user on the basis of external information. In addition, the information processing server 20 is capable of calculating influence rates of the behavior schedule on the goal plans and correcting the goal plans on the basis of the influence rates.

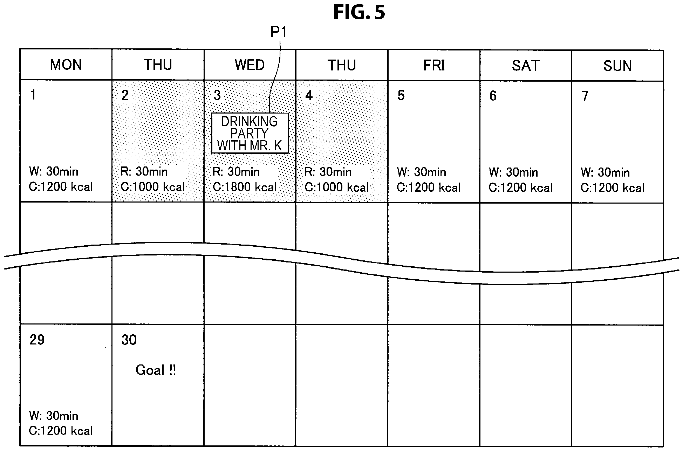

FIG. 5 is a diagram illustrating an example of goal plans corrected on the basis of a behavior schedule of a user and influence rates of the behavior schedule, the behavior schedule having been estimated on the basis of external information. FIG. 5 illustrates an example in which the estimation unit 220 estimates a behavior schedule P1 of the user on the basis of external information, and the planning unit 210 corrects goal plans on the basis of influence rates of the behavior schedule P1. When comparing FIG. 4 with FIG. 5, it is understood that the behavior schedule P1 including a content "drinking party with Mr. K" is added to the day 3 illustrated in FIG. 5, and goal plans for the day 2 to the day 4 are corrected. Here, "R: 30 min" on the day 2 to the day 4 means 30 minutes of running. In addition, in the example illustrated in FIG. 5, the calorie intake limitation of 1200 kcal is corrected to 1000 kcal.

As described above, the planning unit 210 according to the present embodiment is capable of correcting the goal plans for achieving a goal on the basis of estimation of the behavior schedule P1 from the external information, the behavior plan P1 having a negative influence rate on the goal plans.

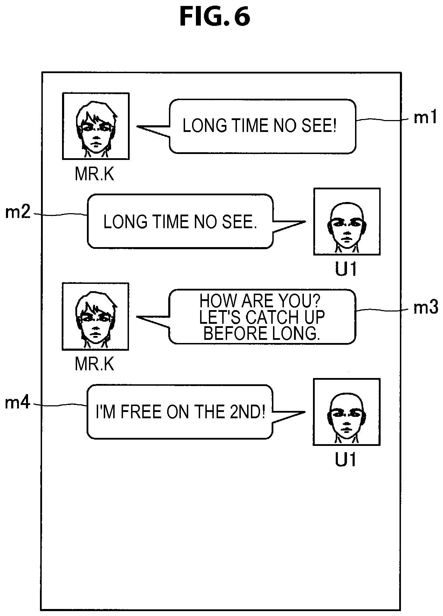

At this time, the estimation unit 220 according to the present embodiment is capable of estimating the behavior schedule P1 of the user on the basis of service information acquired from the external service 30. FIG. 6 is an illustration diagram of the service information acquired from the external service 30. Here, the service information illustrated in FIG. 6 may be service information acquired from a message application or an SNS.

With reference to FIG. 6, the service information includes message histories m1 to m4 between Mr. K and a user U1 having the information processing terminal 10. At this time, the estimation unit 220 according to the present embodiment is capable of estimating the behavior schedule P1 of the user by interpreting intention of wording related to invitation indicated by the message history m3, or wording related to approval and a schedule indicated by the message history m4.

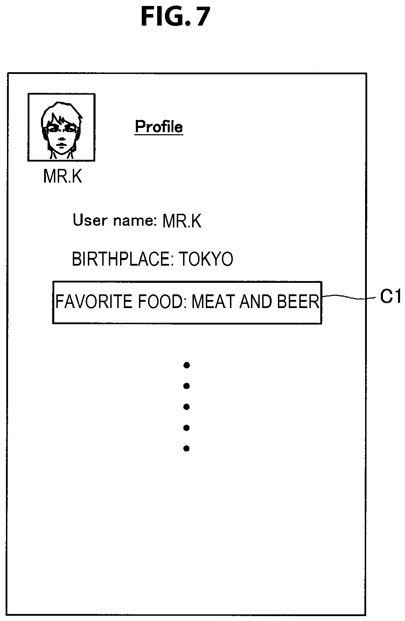

In addition, the estimation unit 220 according to the present embodiment may estimate a behavior schedule of the user with reference to community information included in service information. FIG. 7 is a diagram illustrating an example of the community information acquired from the external service 30. FIG. 7 illustrates a profile of Mr. K who is a partner for the behavior schedule P1. As described above, the community information according to the present embodiment may be various kinds of attribute information that may be acquired from the external service 30 such as an SNS. With reference to the community information illustrated in FIG. 7, it is understood that Mr. K loves high-calorie food such as meat and beer. At this time, the estimation unit 220 is capable of estimating the behavior schedule P1 related to the drinking party on the basis of the above-described community information.

The example of the estimation of the behavior schedule based on external information and the correction of the goal plans according to the present embodiment has been described above. Note that, the example in which the estimation unit 220 estimates behavior of the user on the basis of service information acquired from the message application or the SNS, has been described above. However, the estimation of behavior according to the present embodiment is not limited thereto. For example, the estimation unit 220 according to the present embodiment may estimate a behavior schedule of a user by interpreting intention of sound information included in service information acquired from a voice call application. In addition, the estimation unit 220 according to the present embodiment is also capable of estimating a behavior schedule on the basis of sensor information such as speech of the user collected by the information processing terminal 10.

### (Estimation of behavior schedule based on behavior characteristic and correction of goal plan)

Next, details of estimation of a behavior schedule based on a behavior characteristic and correction of goal plans according to the present embodiment will be described. As described above, the information processing server 20 according to the present embodiment includes a function of estimating a behavior schedule of a user on the basis of behavior characteristics of the user. Here, for example, the behavior characteristics may include preference, a scope of interests, a custom, or the like of the user.

In addition, the estimation unit 220 according to the present embodiment is capable of acquiring the behavior characteristics from behavior histories of the user. For example, the estimation unit 220 may acquire the behavior characteristics from past behavior schedules of the user. In addition, the estimation unit 220 according to the present embodiment may estimate a behavior history of the user on the basis of external information such as service information that has been collected.

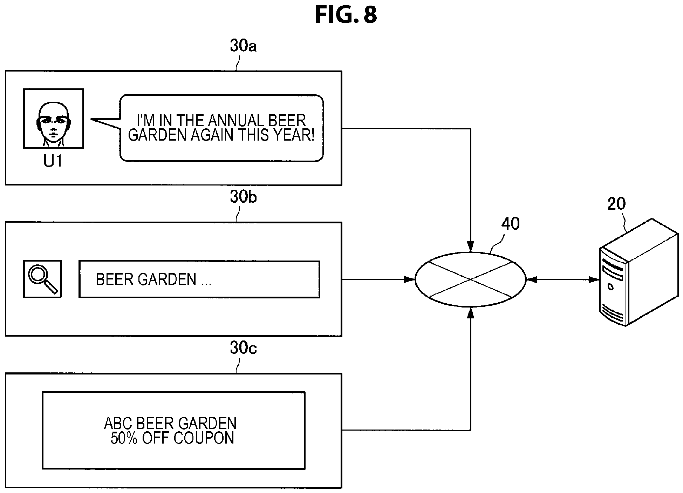

FIG. 8 is a diagram illustrating estimation of a behavior history based on service information according to the present embodiment. For example, as illustrated in FIG. 8 the estimation unit 220 according to the present embodiment is capable of acquiring a behavior characteristic of the user on the basis of service information acquired from the external service 30. In the example illustrated in FIG. 8, the information processing server 20 acquires service information from an external service 30a such as an SNS, the service information including articles posed by the user in the past. At this time, for example, the estimation unit 220 according to the present embodiment may estimate that the user has a habit of going to a beer garden every year, on the basis of the service information.

In addition, in the example illustrated in FIG. 8, the information processing server 20 acquires service information from an external service 30b such as a search service, the service information including search histories that are histories of contents searched by the user in the past. At this time, the estimation unit 220 according to the present embodiment may estimate that the user is interested in the beer garden, the user prefers beer, and the like on the basis of the service information.

In addition, in the example illustrated in FIG. 8, the information processing server 20 acquires, as the service information, information indicating that the user has acquired or used a coupon related to the beer garden from an external service 30c such as a reservation service. At this time, the estimation unit 220 according to the present embodiment is capable of estimating that the user is interested in the beer garden, the user prefers beer, and the like on the basis of the service information.

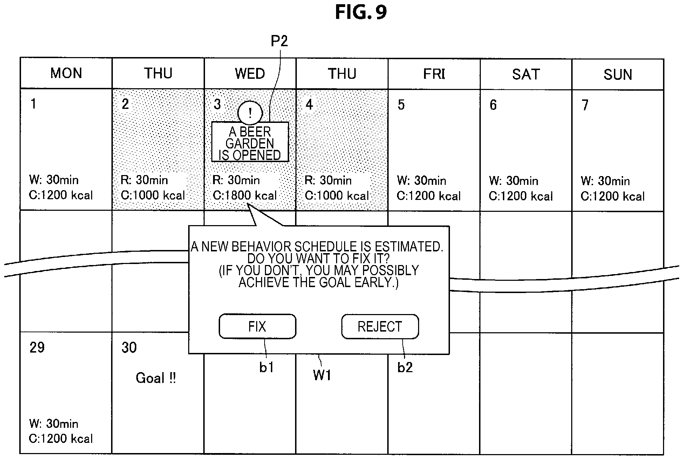

Next, returning to the description of the estimation of the behavior schedule based on the external information and the correction of the goal plans with reference to FIG. 9, FIG. 9 is a diagram illustrating an example of the behavior schedule of the user estimated on the basis of the behavior characteristic and the goal plans corrected on the basis of influence rates of the behavior schedule. FIG. 9 illustrates an example in which the estimation unit 220 estimates a behavior schedule P2 on the basis of a behavior characteristic of a user, and the planning unit 210 corrects goal plans on the basis of influence rates of the behavior schedule P2. When comparing FIG. 4 with FIG. 9, it is understood that the behavior schedule P2 including a content "a beer garden is opened" is added to the day 3 in FIG. 8, and goal plans for the day 2 to the day 4 are corrected.

As described above, the planning unit 210 according to the present embodiment is capable of correcting the goal plans for achieving a goal on the basis of estimation of the behavior schedule P2 from a behavior characteristic of the user, the behavior schedule P2 having a negative influence rate on the goal plans.

In addition, at this time, the planning unit 210 may fix the goal plans on the basis of approval of the corrected goal plans from the user. FIG. 9 illustrates the estimated behavior schedule P2 and a window W1 indicating that the new behavior schedule is estimated and there is a possibility of achieving the goal plans earlier in the case where the behavior schedule is not fixed. For example, the user is capable of checking a message in the window W1 output from the information processing terminal 10 and fixing or rejecting the estimated behavior schedule P2 by pressing a fix button b1 or a reject button b2.

As described above, the information processing server 20 according to the present embodiment is capable of causing the information processing terminal 10 to output the corrected goal plans and information related to the influence rates that are used for correcting the goal plans. When using the above-described functions of the information processing server 20 according to the present embodiment, an effect of suppressing a behavior schedule having a negative influence rate and an effect of encouraging a behavior schedule having a positive influence rate are expected. Note that, goal plans may be fixed on the basis of approval from a user in a way similar to the example illustrated in FIG. 9 even in the case where a behavior schedule is estimated on the basis of external information.

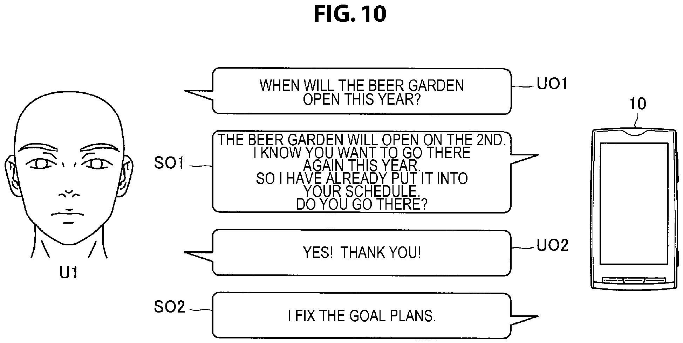

In addition, the goal plan according to the present embodiment may be proposed or approved by voice. FIG. 10 is a diagram illustrating proposal and approval of a goal plan by voice according to the present embodiment. With reference to FIG. 10, the user U1 first makes a speech UO1 that is an inquiry about a behavior schedule. Next, the information processing terminal 10 performs a sound output SO1 indicating that the behavior schedule has already been estimated on the basis of a behavior characteristic of the user U1.

At this time, the information processing terminal 10 is capable of transmitting the collected speech UO1 of the user to the information processing server 20, receiving an output control signal generated on the basis of a result of intention interpretation made by the estimation unit 220, and performing the sound output SO1. In addition, the information processing terminal 10 may output visual information related to the goal plans simultaneously with the sound output SO1 on the basis of a control signal generated by the output control unit 240.

Next, the user U1 makes a speech UO2 indicating that the user U1 approves the proposed goal plans, and the information processing terminal 10 performs a sound output SO2 indicating that the goal plans are fixed on the basis of the speech UO2.

As described above, the information processing server 20 according to the present embodiment is capable of controlling the sound outputs from the information processing terminal 10 and receiving proposal and approval of the goal plans while making conversation with the user. In addition, it is also possible for the information processing server 20 according to the present embodiment to estimate that the user is interested in the beer garden on the basis of sensor information collected from the conversation with the user as illustrated in FIG. 10.

The estimation of the behavior schedule based on the behavior characteristic and the correction of the goal plans according to the present embodiment have been described above. Note that, the example in which the estimation unit 220 estimates a behavior schedule having a negative influence rate from a behavior characteristic of a user and the planning unit 210 corrects goal plans on the basis of the behavior schedule, has been described above. On the other hand, it is also possible for the estimation unit 220 according to the present embodiment to estimate a behavior schedule having a positive influence rate from a behavior characteristic, and it is also possible for the planning unit 210 to correct goal plans on the basis of the behavior schedule.

For example, the estimation unit 220 according to the present embodiment may acquire, from external information, information indicating that the user and the user's family are interested in nature, and may estimate a behavior schedule such as an adventure playground that has a positive influence rate on goal plans on the basis of the behavior characteristic. In addition, at this time, the output control unit 240 may cause the information processing terminal 10 to output the goal plans corrected on the basis of the behavior schedule. In other words, the information processing server 20 according to the present embodiment may include a function of estimating a behavior schedule having a positive influence on goal plans from a behavior characteristic of a user, and recommending the estimated behavior schedule to the user. When using the above-described functions of the information processing server 20 according to the present embodiment, effects of improving motivation of the user for achieving the goal plans and improving a possibility that the user achieves the goal early, are expected.

In addition, the case where the estimation unit 220 estimates the behavior schedule of the user on the basis of the external information has been described above. However, the planning unit 210 according to the present embodiment may correct the goal plans on the basis of a behavior schedule clearly input by the user. In this case, the estimation unit 220 according to the present embodiment is capable of analyzing text related to the behavior schedule clearly input by the user and interpreting intention of the behavior schedule. For example, the estimation unit 220 may perform the above-described processes on the basis of preset keywords or service information acquired from the external service 30.

In addition, the output control unit 240 according to the present embodiment may cause a behavior schedule clearly input by the user and a behavior schedule estimated by the estimation unit 220 to be output in different display formats. For example, the output control unit 240 is capable of causing the behavior schedules to be displayed with different display colors, fonts, or other display effects. In addition, in a similar way, the output control unit 240 may cause a fixed behavior schedule and an unfixed behavior schedule to be displayed distinctively from each other. When using the above-described functions of the output control unit 240, it is possible for the user to easily distinguish the estimated behavior schedule, and improvement in visibility is expected.

### <<1.5. Estimation of causal relationship and calculation of influence rate>>

Next, details of estimation of a causal relationship and calculation of an influence rate performed by the calculation unit 230 according to the present embodiment will be described. As described above, the calculation unit 230 according to the present embodiment includes a function of calculating influence rates of a behavior schedule on goal plans. The calculation unit 230 is capable of calculating the influence rates by estimating causal relationships between the behavior schedule and the goal plans.

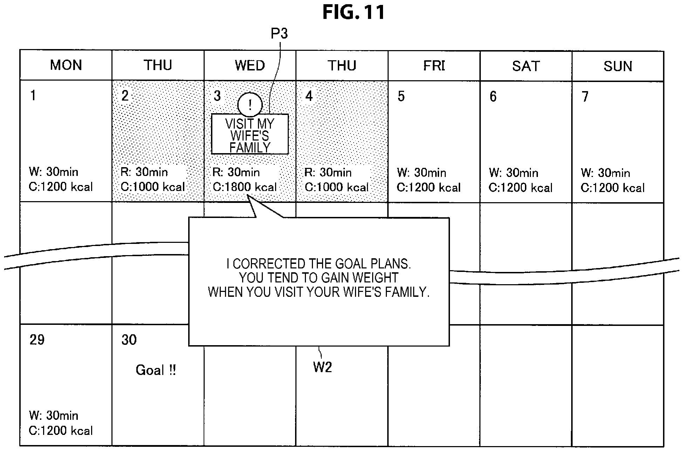

FIG. 11 is a diagram illustrating an example of influence rate calculation performed by the calculation unit 230 according to the present embodiment. FIG. 11 illustrates an example in which the planning unit 210 corrects goal plans on the basis of a behavior schedule P3 estimated by the estimation unit 220 and influence rates of the behavior schedule P3 calculated by the calculation unit 230. When comparing FIG. 4 with FIG. 11, it is understood that the behavior schedule P3 including a content "visit my wife's family" is added to the day 3 in FIG. 11, and goal plans for the day 2 to the day 4 are corrected.

At this time, the calculation unit 230 according to the present embodiment may estimate the causal relationships between the behavior schedule P3 and the goal plans by acquiring a past behavior schedule similar to the behavior schedule P3 and comparing external information collected on a time axis before and after the past behavior schedule. In the example illustrated in FIG. 11, the calculation unit 230 may acquire the similar past behavior schedule, in other words, a behavior schedule of the time when the user has visited his wife's family in the past, and may compare the external information.

In addition, FIG. 11 illustrates a window W2 including information indicating that the goal plans are corrected and explanation about an influence rate related to the behavior schedule P3. As described above, the output control unit 240 according to the present embodiment may cause the information processing terminal 10 to output the information related to the influence rates calculated by the calculation unit 230. When using the above-described functions of the information processing server 20 according to the present embodiment, it is possible to cause a user to perceive a factor (behavior schedule) that influences the goal plans but that the user does not recognize.

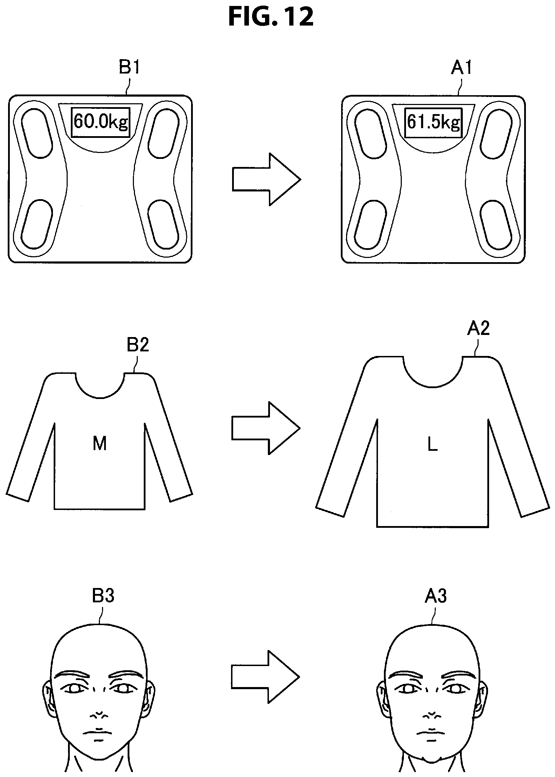

Next, details of causal relationship estimation made by the calculation unit 230 will be described. FIG. 12 is a diagram illustrating examples of estimation of causal relationships performed by the calculation unit 230 according to the present embodiment. As illustrated in the top of FIG. 12, for example, the calculation unit 230 according to the present embodiment may estimate causal relationships between a behavior schedule and goal plans by collecting actual measured values from the external service 30 such as a body weight bathroom scale or a health management application, the actual measured values possibly influencing the goal plans. In the top of FIG. 12, external information B1 and external information A1 are illustrated. The external information B1 is collected before a past behavior schedule, and the external information A1 is collected after the past behavior schedule. As described above, the calculation unit 230 according to the present embodiment is capable of estimating the causal relationships between the behavior schedule and the goal plans and calculating the influence rates by comparing result values collected on a time axis before and after the past behavior schedule. At this time, for example, the calculation unit 230 may calculate the influence rates by performing arithmetic operation based on amounts of change in the collected result values or the like.

In addition, for example, the calculation unit 230 according to the present embodiment may estimate causal relationships between a behavior schedule and goal plans by collecting purchase histories of a user from the external service 30 such as a purchase service. In the middle of FIG. 12, external information B2 and external information A2 are illustrated. The external information B2 is collected before a past behavior schedule, and the external information A2 is collected after the past behavior schedule. As illustrated in the example in FIG. 12, the calculation unit 230 according to the present embodiment is capable of estimating the causal relationships between the behavior schedule and the goal plans and calculating the influence rates in the case where a size of clothing purchased by the user after a past behavior schedule is changed from a size of clothing purchased by the user before the past behavior schedule. At this time, for example, the calculation unit 230 may calculate influence rates on the basis of a preset calculation rule, acquired public information, or the like.

In addition, for example, the calculation unit 230 according to the present embodiment may estimate a causal relationship between a behavior schedule and goal plans by collecting image information or the like of the user from the external service 30 such as an imaging device or an external service like an SNS. In the bottom of FIG. 12, external information B3 and external information A3 are illustrated. The external information B3 is collected before a past behavior schedule, and the external information A3 is collected after the past behavior schedule. As illustrated in the example in FIG. 12, the calculation unit 230 according to the present embodiment is capable of estimating the causal relationships between the behavior schedule and the goal plans and calculating the influence rates in the case where appearance of the user after a past behavior schedule is changed from appearance of the user before the past behavior schedule. In addition, for example, it is also possible for the calculation unit 230 to estimate the causal relationship in the case where speech voice of the user is changed from sound information collected before/after a past behavior schedule.

The estimation of causal relationships performed by the calculation unit 230 according to the present embodiment has been described above with reference to the examples. As described above, the calculation unit 230 according to the present embodiment is capable of estimating the causal relationship by comparing external information collected before and after a similar past behavior schedule. Note that, the estimation described with reference to FIG. 12 is mere examples. It is also possible for the calculation unit 230 according to the present embodiment to estimate the causal relationship on the basis of various kinds of external information other than the information illustrated in FIG. 12.

In addition, the calculation unit 230 may estimate the causal relationship on the basis of a plurality of pieces of external information. For example, the calculation unit 230 according to the present embodiment is capable of estimating a causal relationship on the basis of collected result values and external information related to purchase information. In addition, in the case of making estimation based on the plurality of pieces of external information, the calculation unit 230 may differently weight the pieces of external information in accordance with factors and calculate influence rates. For example, the calculation unit 230 is capable of acquiring information indicating that increase in weight of the user is easily influenced by overeating than insufficient exercise from past external information, setting higher weight for external information related to eating than external information related to insufficient exercise, and calculating influence rates.

In addition, calculation unit 230 may take ambiguity into consideration when estimating the causal relationship. For example, in the case where a schedule of "visiting the wife's family" and a schedule of "visiting a neighboring house" are set on the same day, sometimes it is difficult to specify which of the behavior schedules has influenced goal plans. In such a case, the calculation unit 230 according to the present embodiment may calculate influence rates by using the both behavior schedules as factors (behavior schedules) that influence the goal plans, or may operate such that the both behavior schedules are not treated as the factors (behavior schedules) until data is accumulated. The estimation of causal relationships and the calculation of influence rates according to the present embodiment may be flexibly modified in accordance with characteristics or the like of goal plans.

### «1.6. Goal plan correction based on behavior result»

Next, details of the goal plan correction based on a behavior result according to the present embodiment will be described. As described above, the planning unit 210 according to the present embodiment is capable of correcting generated goal plans on the basis of a behavior result of a user estimated by the estimation unit 220. At this time, for example, the planning unit 210 according to the present embodiment may correct goal plans on the basis of a behavior result of the user with respect to the goal plans estimated by the estimation unit 220.

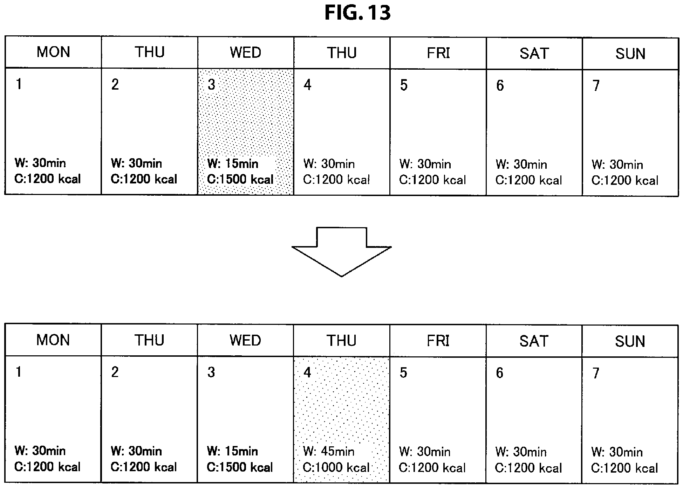

FIG. 13 is a diagram illustrating an example of goal plan correction based on a behavior result with respect to goal plans according to the present embodiment. Behavior results regarding goal plans estimated by the estimation unit 220 are indicated by boldface in the day 1 to day 3 on the top of FIG. 13. Here, the behavior result in the day 3 indicates "W: 15 min" and "C: 1500 kcal". In other words, in the example illustrated in FIG. 13, the estimation unit 220 estimates that the user has not achieved the goal on the day 3. In this case, for example, the planning unit 210 according to the present embodiment may correct a goal plan to a goal plan illustrated in the bottom of FIG. 13. With reference to FIG. 13, it is understood that the planning unit 210 according to the present embodiment corrects the goal plan on 4 to "W: 45 min" and "C: 1000 kcal". As described above, the planning unit 210 according to the present embodiment is capable of correcting future goal plans to compensate for an unachieved goal.

In addition, FIG. 13 illustrates the example in which the planning unit 210 corrects the goal plan in the case where an unachieved behavior result is obtained with respect to the goal plan. However, it is also possible for the planning unit 210 according to the present embodiment to correct goal plans on the basis of estimation of a behavior result of excessive achievement with respect to a goal plan. When using the above-described functions of the planning unit 210 according to the present embodiment, it is possible to dynamically correct goal plans on the basis of a behavior result with respect to a goal plan.

In addition, the planning unit 210 according to the present embodiment may correct goal plans on the basis of a behavior result with respect to a behavior schedule. In other words, the planning unit 210 according to the present embodiment is capable of correcting goal plans in the case where the estimation unit 220 estimates that a scheduled behavior has not been exhibited or an unscheduled behavior has exhibited.

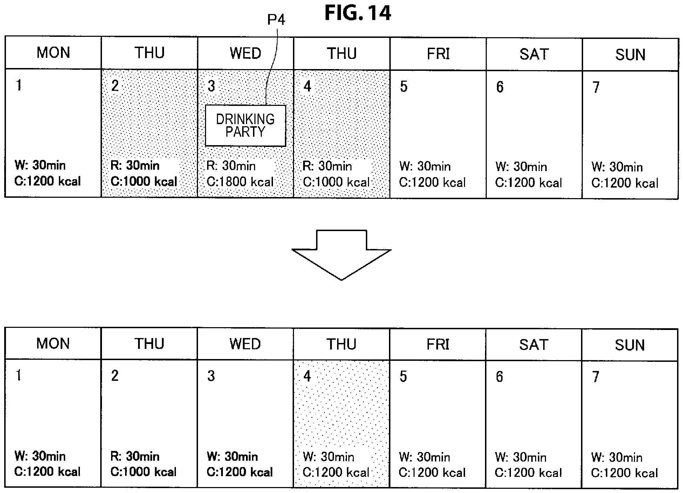

FIG. 14 is a diagram illustrating an example of goal plan correction based on a behavior result with respect to a behavior schedule according to the present embodiment. On the top of FIG. 14, a behavior schedule P4 related to a drinking party and a goal plan corrected by the planning unit 210 on the basis of the behavior schedule P4 are illustrated. Here, for example, in the case where the estimation unit 220 fixes a behavior result indicating that the user has not gone the drinking party of the day 3, the planning unit 210 may correct goal plans on the basis of the behavior result.

On the bottom of FIG. 14, the goal plan corrected by the planning unit 210 is illustrated. With reference to the bottom of FIG. 14, it is understood that the behavior schedule P4 that has been estimated to remain unexecuted is canceled, and the goal plan on the day 4 has been corrected to "W: 30 min" and "C: 1200 kcal". As described above, the planning unit 210 according to the present embodiment is capable of correcting the goal plan on the basis of the behavior result of the user with respect to the behavior schedule.

In addition, FIG. 14 illustrates the example in which the planning unit 210 corrects the goal plan in the case where the behavior schedule is not executed. However, it is also possible for the planning unit 210 according to the present embodiment to correct goal plans on the basis of estimation of an unscheduled behavior that has been exhibited. When using the above-described functions of the planning unit 210 according to the present embodiment, it is possible to dynamically correct goal plans on the basis of a behavior result with respect to a behavior schedule.

Next, details of behavior result estimation made by the estimation unit 220 according to the present embodiment will be described. As described above, the estimation unit 220 according to the present embodiment includes a function of estimating a behavior result with respect to a goal plan or a behavior schedule. At this time, the estimation unit 220 according to the present embodiment is capable of estimating the behavior result from collected service information or sensor information.

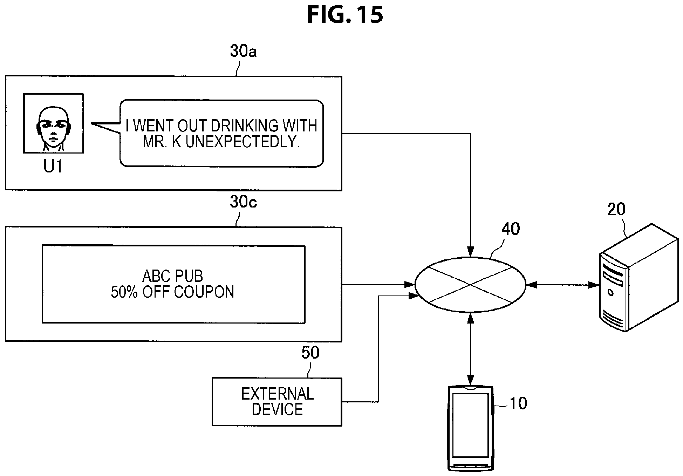

FIG. 15 is a diagram illustrating behavior result estimation made by the estimation unit 220 according to the present embodiment. For example, as illustrated in FIG. 8, the estimation unit 220 according to the present embodiment is capable of estimating a behavior result on the basis of service information acquired from the external service 30. In the example illustrated in FIG. 15, the information processing server 20 acquires service information from the external service 30a such as the SNS, the service information including articles posed by the user in the past. At this time, the estimation unit 220 according to the present embodiment may estimate that the user has attended an unscheduled drinking party on the basis of the service information.

In addition, in the example illustrated in FIG. 15, the information processing server 20 acquires, as the service information, information indicating that the user has used a coupon related to a pub from the external service 30c such as the reservation service. At this time, the estimation unit 220 according to the present embodiment may estimate that the user has attended an unscheduled drinking party on the basis of the service information.

In addition, the estimation unit 220 according to the present embodiment may estimate a behavior result on the basis of sensor information acquired from the information processing terminal 10 or the external device 50. For example, the estimation unit 220 is capable of estimating a behavior result related to exercise done by the user on the basis of sensor information such as an acceleration sensor, a gyro sensor, or a GPS collected from the information processing terminal 10.

In addition, for example, the estimation unit 220 is also capable of estimating that the user has been in a house on the basis of sensor information acquired from the external device 50 such as an imaging device or a motion detector, and estimating that the scheduled behavior has not been exhibited or an unachieved behavior result has been obtained with respect to a goal plan.

The goal plan correction based on a behavior result according to the present embodiment has been described above. As described above, the estimation unit 220 according to the present embodiment is capable of estimating a behavior result of a user on the basis of acquired external information. In addition, the planning unit 210 according to the present embodiment is capable of correcting goal plans on the basis of the estimated behavior result. When using the above-described functions of the information processing server 20 according to the present embodiment, it is possible to dynamically correct the goal plans and considerably reduce the user's input loads even in the case where the user does not clearly input a behavior result.

### <<1.7. Workflow of operation of information processing server 20»

Next, a workflow of operation of the information processing server 20 according to the present embodiment will be described.

### (Workflow of goal plan correction based on estimation of behavior schedule)

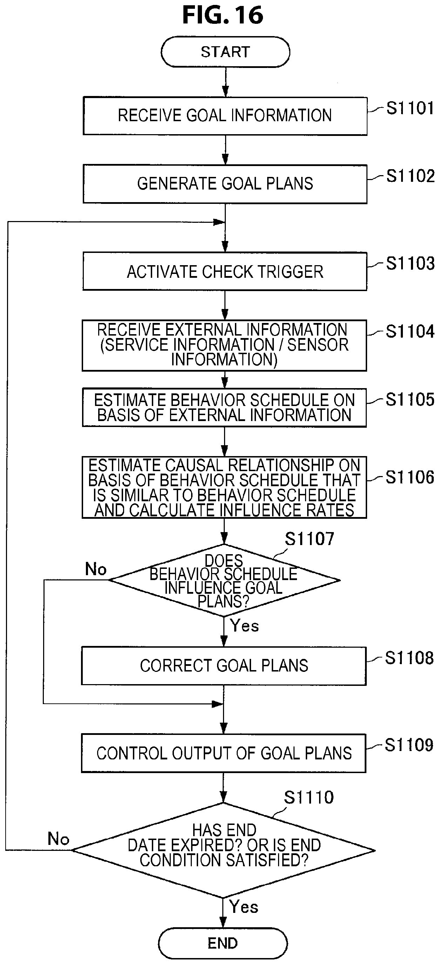

First, the workflow of goal plan corrected based on estimation of a behavior schedule according to the present embodiment will be described. FIG. 16 is a flowchart illustrating the workflow of goal plan correction based on estimation of a behavior schedule.

With reference to FIG. 16, the communication unit 250 of the information processing server 20 first receives goal information input by a user from the information processing terminal 10 (S1101). Here, the goal information received by the communication unit 250 may include information such as a type of a goal or a goal value.

Next, the planning unit 210 according to the present embodiment generates goal plans on the basis of the goal information received in Step S1101 (S1102).

Next, the estimation unit 220 activates a check trigger related to correction of the goal plans (S1103). Here, the check trigger may be planned regularly or irregularly. In addition, for example, the check trigger may be executed when the user posts an article to the external service 30 such as an SNS, for example.

When the check trigger is activated in Step S1103, the communication unit 250 receives external information such as service information or sensor information (S1104).

Next, the estimation unit 220 estimates a behavior schedule on the basis of the external information received in Step S1104 (S1105).

Next, the calculation unit 230 estimates a causal relationship on the basis of a past behavior schedule that is similar to the behavior schedule estimated in Step S1105, and calculates influence rates (S1106).

Next, the planning unit 210 determines whether or not the behavior schedule influences the goal plans on the basis of the behavior schedule estimated in Step S1105 and the influence rates estimated in Step S1106 (Step S1107).

Here, in the case where it is determined that the behavior schedule influences the goal plan (YES in Step S1107), the planning unit 210 corrects the goal plans on the basis of the influence rates calculated in Step S1106 (Step S1108).

After Step S1108 ends, or in the case where the planning unit 210 determines that the behavior schedule does not influence the goal plans (No in Step S1107), the output control unit 240 control output related to the goal plans (Step S1109).

Next, the planning unit 210 determines whether or not an end date has expired or whether or not an end condition is satisfied (Step S1110). Here, for example, the end condition may be a condition that the goal is achieved or an end instruction from the user.

Here, in the case where the planning unit 210 determines that the above-described condition is not satisfied (No in Step S1110), the information processing server 20 returns to Step S1103 and repeats the subsequent processes.

On the other hand, in the case where the planning unit 210 determines that the end condition is satisfied (Yes in Step S110), the information processing server 20 ends the goal plan correction process based on the estimation of the behavior schedule.

### (Workflow of goal plan correction based on estimation of behavior result)

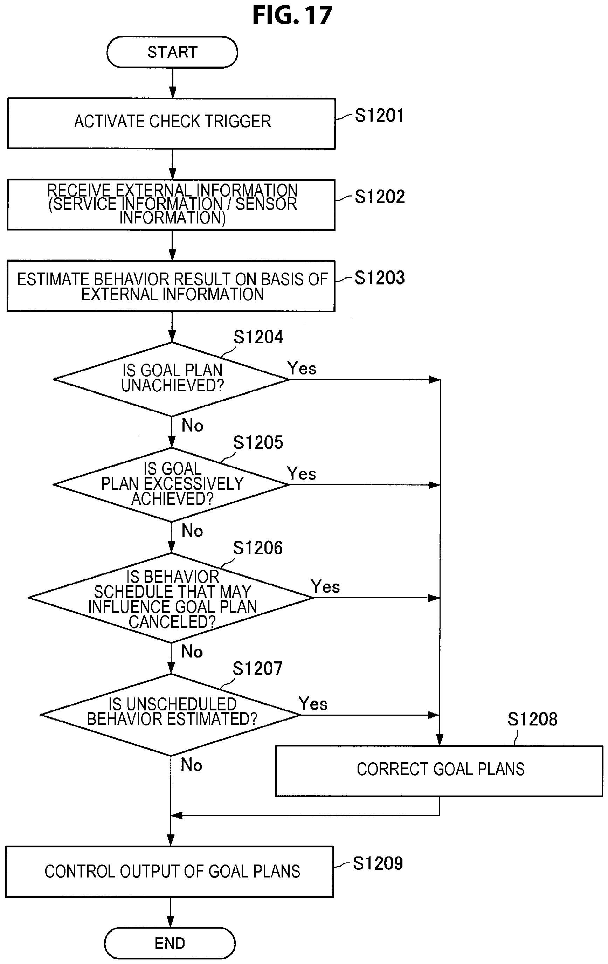

Next, the workflow of goal plan correction based on estimation of a behavior result according to the present embodiment will be described. FIG. 17 is a flowchart illustrating the workflow of goal plan correction based on estimation of a behavior result. Note that, hereinafter, it is assumed that goal plans have already been generated by the planning unit 210.

With reference to FIG. 17, the estimation unit 220 first activates a check trigger related to correction of a goal plan (S1201). The check trigger may be activated at a timing similar to the case where a goal plan is corrected on the basis of estimation of the behavior schedule.

When the check trigger is activated in Step 1201, the communication unit 250 receives external information such as service information or sensor information (S1202).

Next, the estimation unit 220 estimates a behavior result on the basis of the external information received in Step S1202 (S1203).

Next, the planning unit 210 determines whether or not the behavior result estimated in Step S1203 indicates that the goal plan is unachieved (Step S1204).

Here, in the case where the behavior result indicates that the goal plan is unachieved (Yes in Step S1204), the planning unit 210 corrects the goal plans on the basis of the behavior result estimated in Step S1204 (Step S1208).

On the other hand, in the case where the behavior result does not indicate that the goal plan is unachieved (No in Step S1204), the planning unit 210 subsequently determines whether or not the behavior result indicates that the goal plan is excessively achieved (S1205).

Here, in the case where the behavior result indicates that the goal plan is excessively (Yes in Step S1205), the planning unit 210 corrects the goal plans on the basis of the behavior result estimated in Step S1204 (Step S1208).

On the other hand, in the case where the behavior result does not indicate that the goal plan is excessively achieved (No in Step S1205), the planning unit 210 subsequently determines whether or not the behavior result indicates that the behavior schedule is canceled (Step S1206).

Here, in the case where the behavior result indicates that the goal plan is canceled (Yes in Step S1206), the planning unit 210 corrects the goal plans on the basis of the behavior result estimated in Step S1204 (Step S1208).

On the other hand, in the case where the behavior result does not indicate that the goal plan is canceled (No in Step S1206), the planning unit 210 subsequently determines whether or not the behavior result indicates unscheduled behavior of the user (Step S1207).

Here, in the case where the behavior result indicates unscheduled behavior of the user (Yes in Step S1207), the planning unit 210 corrects the goal plans on the basis of the behavior result estimated in Step S1204 (Step S1208).

On the other hand, in the case where the behavior result does not indicate unscheduled behavior of the user (No in Step S1204), the output control unit 240 controls output related to goal plans (S1209) and the information processing server 20 ends the goal plan correction process based on the behavior result.

### <2. Exemplary hardware configuration>

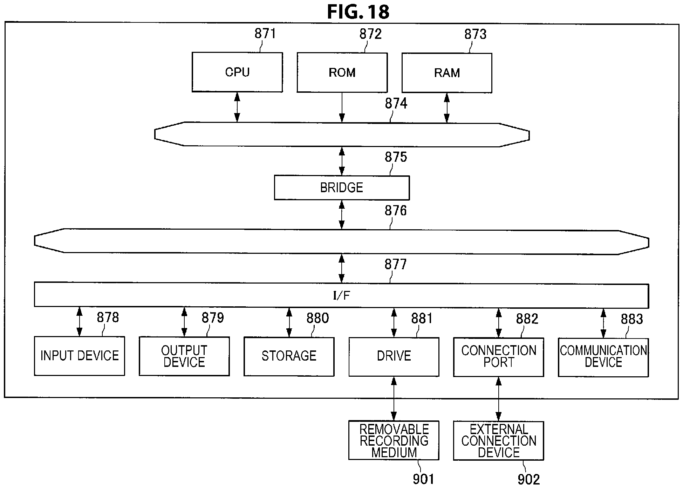

Next, an example of the hardware configuration common to the information processing terminal 10 and the information processing server 20 according to the present disclosure is now described. FIG. 18 is a block diagram illustrating an example of the hardware configuration of the information processing terminal 10 and the information processing server 20 according to the present disclosure. Referring to FIG. 18, the information processing terminal 10 and the information processing server 20 include, in one example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Moreover, the hardware configuration shown here is illustrative, and some of components can be omitted. In addition, a component other than the components shown here can be further included.

### (CPU 871)

The CPU 871 functions as, in one example, an arithmetic processing unit or a control device, and controls some or all of the operations of each component on the basis of various programs recorded in the ROM 872, the RAM 873, the storage 880, or a removable recording medium 901.

### (ROM 872 and RAM 873)

The ROM 872 is a means for storing programs read into the CPU 871, data used for operation, or the like. The RAM 873 temporarily or permanently stores, in one example, a program to be read into the CPU 871, various parameters appropriately changing in executing the program, or the like.

### (Host bus 874, bridge 875, external bus 876, and interface 877)

The CPU 871, the ROM 872, and the RAM 873 are mutually connected via, in one example, the host bus 874 capable of high-speed data transmission. On the other hand, the host bus 874 is connected to the external bus 876 having a relatively low data transmission speed, in one example, via the bridge 875. In addition, the external bus 876 is connected to various components via the interface 877.

### (Input device 878)

Examples of the input device 878 include a mouse, a keyboard, a touch panel, buttons, a switch, a lever, or the like. Furthermore, examples of the input device 878 include a remote controller capable of transmitting a control signal using infrared rays or other radio waves (hereinafter referred to as a remote controller). In addition, the input device 878 includes a speech input device such as a microphone.

### (Output device 879)

The output device 879 is a device capable of visually or audibly notifying the user of the acquired information, which includes a display device such as a cathode ray tube (CRT), an LCD, or an organic EL, an audio output device such as a loudspeaker or a headphone, a printer, a mobile phone, a facsimile, or the like.

### (Storage 880)

The storage 880 is a device used to store various types of data. Examples of the storage 880 include a magnetic storage device such as hard disk drives (HDDs), a semiconductor storage device, an optical storage device, a magneto-optical storage device, or the like.

### (Drive 881)

The drive 881 is a device that reads information recorded on the removable recording medium 901 such as a magnetic disk, an optical disk, a magneto-optical disk, or a semiconductor memory or writes information to the removable recording medium 901.

### (Removable recording medium 901)

Examples of the removable recording medium 901 include a DVD medium, a Blu-ray (registered trademark) medium, an HD DVD medium, various kinds of semiconductor storage media, or the like. Of course, the removable recording medium 901 is preferably, in one example, an IC card or an electronic device mounted with a contactless IC chip.

### (Connection port 882)

The connection port 882 is a port used for connection with an external connection device 902, such as a universal serial bus (USB) port, an IEEE 1394 port, a small computer system interface (SCSI), an RS-232C port, or an optical audio terminal.

### (External connection device 902)

Examples of the external connection device 902 include a printer, a portable music player, a digital camera, a digital video camera, an IC recorder, or the like.

### (Communication device 883)

The communication device 883 is a communication device used for connection with a network, and examples thereof include a communication card for wired or wireless LAN, Bluetooth (registered trademark), or wireless USB (WUSB), a router for optical communication, a router for asymmetric digital subscriber line (ADSL), or a modem for various communications.

### <3. Conclusion>

As described above, the information processing server 20 according to the present disclosure may estimate a behavior schedule of a user on the basis of sensor information or external information such as service information. In addition, the information processing server 20 according to the present disclosure may estimate a behavior result of the user on the basis of the external information. In addition, the information processing server 20 according to the present embodiment is capable of dynamically correcting goal plans on the basis of an estimated behavior schedule or behavior result. According to the above-described configuration, it is possible to dynamically correct goal plans even in the case where the user does not clearly input factors.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, the present embodiment has been described above while using the goal plans related to dieting as an example. However, the present technology is not limited thereto. For example, the goal plans according to the present disclosure may be learning plans related to language, a license, or the like. In this case, for example, the information processing server 20 is capable of estimating a learning result of the user by presenting the user with an examination of a level corresponding to the goal plans.

In addition, for example, the goal plans according to the present disclosure may be a plan such as a time-up regarding various kinds of sports, for example. In this case, the information processing server 20 may estimate a behavior result of the user on the basis of service information acquired from the exercise management application or the like.

In addition, for example, the goal plans according to the present disclosure may be plans for a goal that is difficult for a regular person to manage by oneself such as a blood sugar level, cholesterol, or stabilization of a blood pressure, for example. The information processing server 20 according to the present disclosure is capable of estimating a causal relationship between the above-described goal and behavior and dynamically correcting the goal plans.

It may not be necessary to chronologically execute respective steps in the process, which is executed by the information processing server 20 described in this specification, in the order described in the flow charts. For example, the respective steps in the process which is executed by the information processing server 20 may be processed in the order different from the order described in the flow charts, and may also be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   a planning unit configured to generate a goal plan for achieving a set goal;
   an estimation unit configured to estimate a behavior schedule of a user on the basis of collected external information; and
   a calculation unit configured to calculate an influence rate of the behavior schedule on the goal plan,
   in which the planning unit corrects the goal plan on the basis of the influence rate.
(2) The information processing device according to (1),
   in which the calculation unit calculates the influence rate by estimating a causal relationship between the behavior schedule and the goal plan.
(3) The information processing device according to (2),
   in which the calculation unit estimates the causal relationship by acquiring a past behavior schedule that is similar to the behavior schedule and comparing external information collected on a time axis before and after the past behavior schedule.
(4) The information processing device according to any of (1) to (3), in which
   the external information includes service information acquired from an external service, and
   the estimation unit estimates the behavior schedule on the basis of the service information.
(5) The information processing device according to (4),
   in which the estimation unit estimates the behavior schedule by interpreting intention on the basis of the service information.
(6) The information processing device according to (4) or (5),
   in which the external service includes at least any of a message application or an SNS.
(7) The information processing device according to any of (1) to (6),
   in which the estimation unit estimates the behavior schedule on the basis of a behavior characteristic of the user.
(8) The information processing device according to (7),
   in which the estimation unit acquires the behavior characteristic from a behavior history of the user.
(9) The information processing device according to (8),
   in which the estimation unit estimates the behavior history on the basis of the external information.
(10) The information processing device according to any of (1) to (9), in which
   the estimation unit estimates a behavior result of the user, and
   the planning unit corrects the goal plan on the basis of the estimated behavior result.
(11) The information processing device according to (10),
   in which the estimation unit estimates the behavior result on the basis of the external information.
(12) The information processing device according to (11), in which
   the external information includes service information acquired from an external service, and
   the estimation unit estimates the behavior result on the basis of the service information.
(13) The information processing device according to any of (1) to (12), further including
   an output control unit configured to control output related to the goal plan,
   in which the output control unit causes an output unit to output the goal plan corrected by the planning unit, and
   the planning unit fixes the goal plan on the basis of approval of the corrected goal plan from the user.
(14) The information processing device according to (13),
   in which the output control unit causes the output unit to output the goal plan corrected by the planning unit and information related to the influence rate that is used for correcting the goal plan.
(15) An information processing device including:
   an input unit configured to receive a goal input by a user; and
   an output unit configured to output a goal plan generated on the basis of the goal,
   in which the output unit outputs a goal plan corrected on the basis of a behavior schedule of the user and an influence rate of the behavior schedule on the goal plan, the behavior schedule being estimated on the basis of collected external information.
(16) The information processing device according to (15),
   in which the influence rate is calculated on the basis of estimation of a causal relationship between the goal and a behavior history of the user.

### Reference Signs List

- 10: information processing terminal
- 110: input unit
- 120: sensor unit
- 130: output unit
- 140: server communication unit
- 20: information processing server
- 210: planning unit
- 220: estimation unit
- 230: calculation unit
- 240: output control unit
- 250: communication unit
- 30: external service
- 40: network
- 50: external device

## Claims

1. An information processing device comprising:
a planning unit configured to generate a goal plan for achieving a set goal;
an estimation unit configured to estimate a behavior schedule of a user on a basis of collected external information; and
a calculation unit configured to calculate an influence rate of the behavior schedule on the goal plan,
wherein the planning unit corrects the goal plan on a basis of the influence rate.

2. The information processing device according to claim 1,
wherein the calculation unit calculates the influence rate by estimating a causal relationship between the behavior schedule and the goal plan.

3. The information processing device according to claim 2,
wherein the calculation unit estimates the causal relationship by acquiring a past behavior schedule that is similar to the behavior schedule and comparing external information collected on a time axis before and after the past behavior schedule.

4. The information processing device according to claim 1, wherein
the external information includes service information acquired from an external service, and
the estimation unit estimates the behavior schedule on a basis of the service information.

5. The information processing device according to claim 4,
wherein the estimation unit estimates the behavior schedule by interpreting intention on a basis of the service information.

6. The information processing device according to claim 4,
wherein the external service includes at least any of a message application or an SNS.

7. The information processing device according to claim 1,
wherein the estimation unit estimates the behavior schedule on a basis of a behavior characteristic of the user.

8. The information processing device according to claim 7,
wherein the estimation unit acquires the behavior characteristic from a behavior history of the user.

9. The information processing device according to claim 8,
wherein the estimation unit estimates the behavior history on a basis of the external information.

10. The information processing device according to claim 1, wherein
the estimation unit estimates a behavior result of the user, and
the planning unit corrects the goal plan on a basis of the estimated behavior result.

11. The information processing device according to claim 10,
wherein the estimation unit estimates the behavior result on a basis of the external information.

12. The information processing device according to claim 11, wherein
the external information includes service information acquired from an external service, and
the estimation unit estimates the behavior result on a basis of the service information.

13. The information processing device according to claim 1, further comprising
an output control unit configured to control output related to the goal plan,
wherein the output control unit causes an output unit to output the goal plan corrected by the planning unit, and
the planning unit fixes the goal plan on a basis of approval of the corrected goal plan from the user.

14. The information processing device according to claim 13,
wherein the output control unit causes the output unit to output the goal plan corrected by the planning unit and information related to the influence rate that is used for correcting the goal plan.

15. An information processing device comprising:
an input unit configured to receive a goal input by a user; and
an output unit configured to output a goal plan generated on a basis of the goal,
wherein the output unit outputs a goal plan corrected on a basis of a behavior schedule of the user and an influence rate of the behavior schedule on the goal plan, the behavior schedule being estimated on a basis of collected external information.

16. The information processing device according to claim 15,
wherein the influence rate is calculated on a basis of estimation of a causal relationship between the goal and a behavior history of the user.
